# EUROPÄISCHE PATENTSCHRIFT

(11) **EP 2 318 275 B1**
(45) Veröffentlichungstag und Bekanntmachung des Hinweises auf die Patenterteilung: **30.03.2016**
(21) Anmeldenummer: 09781781.1
(22) Anmeldetag: 13.08.2009
(51) Int. Cl.: B64D 11/00

(54) **LIEGE-ANORDNUNG**
BERTH
COUCHETTE

(30) Priorität: 25.08.2008 DE 102008039635; 25.08.2008 US 190024 P
(43) Veröffentlichungstag der Anmeldung: 11.05.2011
(73) Patentinhaber: Airbus Operations GmbH, 21129 Hamburg (DE)
(72) Erfinder: AMSTUTZ, Stefan, 22609 Hamburg (DE); WARNER, Holger, 21635 Jork (DE)
(74) Vertreter: Maiwald Patentanwalts GmbH
(86) Internationale Anmeldenummer: PCT/EP2009/060471
(87) Internationale Veröffentlichungsnummer: WO 2010/026026

(56) Entgegenhaltungen:
- EP-A1- 0 734 665
- US-A- 622 993
- US-A- 3 898 704
- US-A- 4 084 276
- US-A1- 2005 217 021

## Beschreibung

### BEZUG AUF ZUGEHÖRIGE ANMELDUNGEN

Die vorliegende Anmeldung beansprucht die Priorität der US Provisional Patentanmeldung Nr. 61/190,024, eingereicht am 25. August 2008 und der deutschen Patentanmeldung Nr. 10 2008 039 635.4, eingereicht am 25. August 2008.

### BEREICH DER ERFINDUNG

Die vorliegende Erfindung betrifft ein Luftfahrzeug mit einer Liege-Anordnung.

### HINTERGRUND DER ERFINDUNG

Auf Flügen mit langer Dauer ist es möglich, dass die gesetzlich zulässigen Arbeitszeiten für eine Flugzeugbesatzung überschritten werden. Es mag daher gesetzlich gefordert sein, ab einer gewissen Flugdauer eine Ersatz- bzw. Wechselflugzeugbesatzung mitzuführen. Damit diese weitere Flugzeugbesatzung während des Teils eines Fluges, welcher für sie keine Arbeitszeit darstellt, ausreichend Ruhe und Erholung erfährt, um zu geeigneter Zeit selbst arbeitstechnisch tätig zu werden, sind in heutigen Flugzeugen, insbesondere Großraumpassagierflugzeugen, Ruhemöglichkeiten vorgesehen, die es zumindest Teilen einer Flugzeugbesatzung ermöglichen, sich zu erholen bzw. auszuruhen, beispielsweise um ein Buch zu lesen oder zu schlafen.

Für derartige Ruhemöglichkeiten mögen verschiedene Lösungsansätze vorgesehen sein.

Beispielsweise mögen in einem Flugzeug so genannte Crew Rest Compartments vorgesehen sein, welche meist als spezielle, separate Räume mit Sitz- oder Liegemöglichkeiten eingerichtet sind und welche im Regelfall ausschließlich von Mitgliedern der Flugzeugbesatzung verwendet werden.

Ein derartiges Crew Rest Compartment benötigt jedoch einerseits wertvollen Platz in einem Flugzeug, welcher bei geänderter Innenausstattung für den Transport weiterer Passagiere oder zusätzlicher Fracht verwendet hätte werden können.

Zudem besitzen Crew Rest Compartments meist ein hohes Eigengewicht, lassen sich aufgrund ihrer Ausgestaltung als große Monumente einer Flugzeuginnenausstattung nicht kurzfristig bzw. bei Bedarf ein-, ausbauen bzw. umrüsten und müssen somit jedenfalls als tote Masse im Flugzeug belassen werden.

Als weitere Ruhemöglichkeit mag ein regulärer Passagiersitz, beispielsweise der Economy-Klasse, für ein Mitglied einer Flugzeugbesatzung reserviert werden, welcher dann meist durch einen Vorhang vom Rest der Passagierkabine abgetrennt wird.

Auch bei Verwendung eines regulären Passagiersitzes geht Platz verloren, welcher anderenfalls einem zahlenden Passagier zur Verfügung gestellt hätte werden können, so genannter revenue space. Weiterhin weisen reguläre Passagiersitze als Ruhemöglichkeit meist nur geringen Komfort und wenig Privatsphäre auf.

Weiterhin ist die Verwendung eines High Comfort Cabin Attendent Seat (CAS) als Ruhemöglichkeit denkbar. Ein solcher High Comfort Cabin Attendent Seat mag mehr Komfort bieten als ein Passagiersitz der Economy-Klasse, beispielsweise durch eine konturierte Ausgestaltung mit neigbarer Rückenlehne und zusätzlicher Beinauflage. Auch ist die Verwendung entsprechender Business Class- oder First Class-Sitze denkbar.

Zwar mag ein High Comfort Cabin Attendent Seat verbesserten Ruhekomfort bieten, stellt jedoch trotzdem meist keine ebene Liegefläche zur Verfügung. Zudem mag aufgrund seiner konturierten Form der Schlafkomfort eingeschränkt sein.

Die Patentschrift DE 10 2004 035 160 A1 bzw. WO 2006/008 151 A1 beschreibt ein modulares Wandbausystem für Flugzeugkabinen, wobei einzelne vorgefertigte Wandbauplatten mittels Verbindungselementen zu Räumen unterschiedlicher Größe und Geometrie schnell und ohne zusätzliches Werkzeug am Kabinenboden montierbar sind

Die Patentschrift US 3,898,704 beschreibt ein "convertable seat-bed equipment", bei welchem sich ein Sitz mit geneigter Rückenlehne in eine doppelstöckige Liegemöglichkeit umbilden lässt.

Herkömmliche Ruhemöglichkeiten für eine Flugzeugbesatzung weisen somit meist wenig Komfort oder Privatsphäre auf oder benötigen andererseits signifikanten Platz in einem Flugzeug.

### ZUSAMMENFASSUNG DER ERFINDUNG

Es mag somit als eine Aufgabe der vorliegenden Erfindung angesehen werden, eine komfortable Ruhemöglichkeit mit erweiterter Privatsphäre bei gleichzeitig verringertem Gewicht und Abmaßen bereitzustellen.

Diese Aufgabe wird gelöst durch die Merkmale des unabhängigen Anspruchs 1.

Die erfindungsgemäße Liege-Anordnung mag es ermöglichen, einen zeitweise anders genutzten bzw. benötigten Bereich temporär in einen Ruhebereich mit Ruhemöglichkeiten für eine Flugzeugbesatzung umzugestalten. Dies mag insbesondere dadurch ermöglicht werden, dass der fragliche, ungenutzte Bereich insbesondere zu einem bestimmten betrachteten Zeitraum ungenutzt ist, wie beispielsweise der Eingangsbereich im Bereich einer Flugzeugtüre während des Fluges. Die Verwendung eines entsprechend temporär ungenutzten Bereichs mag es ermöglichen, ohne bzw. nur mit minimalem Verlust an revenue space Ruhemöglichkeiten für eine Flugzeugbesatzung vorzusehen.

Die vorliegende Erfindung ermöglicht es hierbei, im Wesentlichen vollkommen ebene, waagrechte, großzügige Liegemöglichkeiten bereitzustellen. Durch geeignete Ausgestaltung der Liegemöglichkeiten in Zusammenschau mit der umliegenden Flugzeuginnenausstattung mag es möglich sein, die Ruhemöglichkeiten in sich kompakt abzuschließen und somit Liegemöglichkeiten beispielsweise ohne Ritzen, Kanten oder Vertiefungen bereitzustellen.

Im Rahmen der vorliegenden Erfindung mag sich somit auch das zusätzliche, signifikante Gewicht herkömmlicher, platzraubender Crew Rest Compartments vermeiden lassen.

Durch ein Vorsehen zusätzlicher Klappen bzw. klappbarer Wände, Isolationen und/oder Vorhänge mag den Mitgliedern einer Flugzeugbesatzung darüber hinaus mehr Privatsphäre zur Verfügung gestellt werden, die im Wesentlichen der eines separaten Crew Rest Compartments entspricht.

Die erfindungsgemäße Liege-Anordnung besteht hierbei aus drei übereinander angeordneten und durch die erfindungsgemäße Lagerung verschiebbaren, verschwenkbaren bzw. klappbaren Liegemöglichkeiten.

Befestigt ist die Liegemöglichkeit an einem ersten Trägerelement, beispielsweise eine Metallkonstruktion oder auch ein Fach in einer entsprechend ausgestalteten Wand eines Elementes der Flugzeuginnenausstattung. Die Liegemöglichkeit ist in einem ersten Befestigungsbereich durch zumindesten zwei, gleiche oder unterschiedliche, Befestigungselemente mit dem Trägerelement verbunden. Die Liegemöglichkeit ist von einem zweiten Zustand, in welchem die Liegemöglichkeit im Wesentlichen weggeklappt senkrecht stehend, in einer Nische, an einer Wand oder dergleichen angeordnet ist in einen ersten Zustand verschiebbar bzw. verschwenkbar, in welchem die Liegemöglichkeit im Wesentlichen horizontal, parallel zum Boden der Flugzeugkabine, angeordnet ist.

Im ersten Zustand ist eine erfindungsgemäße Benutzung der Liegemöglichkeit als Ruhemöglichkeit für ein Mitglied einer Flugzeugbesatzung vorgesehen.

Ein geringer Schwenkbereich ergibt sich durch eine Verschwenkung der Liegemöglichkeit, welche eine Kombination aus einer Rotations- und einer Translationsbewegung darstellt.

Der Crew Rest Bereich, also der Bereich der angebrachten Liege-Anordnung. besteht hierbei aus drei übereinander angeordneten, klappbaren Liegemöglichkeiten, welche zwischen einer ersten und einer zweiten Begrenzung, zum Beispiel eine vordere Wand einer Flugzeuginnenausstattung und einem Gehäuse, angeordnet sein mögen.

Jede Liegemöglichkeit mag über ein Staufach für persönliche Gegenstände verfügen. Die Liegemöglichkeiten mögen an einem Befestigungsbereich um eine horizontale Achse kippbar an einem verschiebbaren Drehgelenk bzw. Gleiter befestigt sein. Das Drehgelenk ist verschiebbar gelagert und mag sich in einer Linearführung am ersten Trägerelement in einem Gehäuse bewegen, welches ebenfalls nur eine Bewegung in einem Freiheitsgrad zulassen mag.

Auf der jeweils dem Drehgelenk gegenüberliegenden Seite des ersten Befestigungsbereiches mögen die Liegemöglichkeiten über eine Strebe bzw. ein Seil oder eine Kulissenführung geführt werden. Kulissenführung mag in diesem Zusammenhang als ein Beschlag verstanden werden, welcher dem geführten Befestigungspunkt einen vorgegebenen Bewegungspfad aufzwingt. Eine beidseitige, symmetrische Anordnung von verschiebbaren Drehgelenken bzw. Führung ist ebenfalls denkbar.

Die verschiebbaren Drehgelenke mögen in ihrer jeweiligen Endposition, insbesondere bei horizontaler Lage der Liegemöglichkeiten verriegeln. Am zweiten Befestigungsbereich der Liegemöglichkeiten mögen sich beidseitig Lagerungspunkte befinden, welche bei horizontaler Ausrichtung der Liegemöglichkeiten in dafür vorgesehene Aufnahmepunkte am zweiten Trägerelement einfahren und/oder dort verriegeln.

Weiterhin ist bei entsprechenden Abmessungen des Crew Rest Bereichs auch eine Ausgestaltung mit mehreren Liegemöglichkeiten nebeneinander auf jeder Ebene denkbar.

Bei jeder Liegemöglichkeit mag eine Versorgungseinheit angeordnet sein, unter anderem bestehend aus Leselicht, Luftdüse, Sauerstoffversorgung, Unterhaltungssystemen und/oder attendent station.

Für erhöhten Komfort mögen Barrieren im Seitenbereich oder an den einzelnen Betten vorgesehen sein (zum Beispiel eine Isolation oder secondary lining bzw. Vorhänge oder eine klappbare Wand).

Weiterhin ist eine Ausgestaltung denkbar, in der ein Cabin Attendent Seat vor der Liege-Anordnung im zweiten Zustand angeordnet ist. Dieser Cabin Attendent Seat mag über einen Gelenkmechanismus seitlich verschwenkt werden, um so nachfolgend ein Überführen der Liege-Anordnung vom zweiten Zustand in den ersten zu ermöglichen.

Bereits ein zur Seite geschwenkter Cabin Attendent Seat mag für eine verbesserte Privatsphäre zumindest einiger der Liegemöglichkeiten sorgen. Eine Ausführung von zwei Liegemöglichkeiten mag sich leicht durch Weglassen einer der Liegemöglichkeiten, beispielsweise der untersten, realisieren lassen.

Entsprechende Geometrieanpassungen sind denkbar, so dass bei Weglassen einer einzelnen Liegemöglichkeit der zur Verfügung stehende Platz der anderen Liegemöglichkeiten erhöht werden mag.

Ist entsprechender Platz vorhanden, so mögen mehrere Möglichkeiten pro Ebene nebeneinander angeordnet werden, um so beispielsweise eine Liege-Anordnung mit sechs Liegemöglichkeiten bereitzustellen.

Weitere exemplarische Ausgestaltungen der vorliegenden Erfindung ergeben sich aus den abhängigen Ansprüchen.

Im Weiteren werden Ausgestaltungen der erfindungsgemäßen Liege-Anordnung beschrieben.

Durch die im ersten Zustand übereinander angeordnete Liegemöglichkeiten mag es ermöglicht werden, bei im Wesentlichen unverändertem Platzbedarf der erfindungsgemäßen Liege-Anordnung ein mehrfaches an Liegemöglichkeiten als Ruhemöglichkeit für ein Mitglied einer Flugzeugbesatzung bereitzustellen. Diese mögen somit weiterhin auf unterschiedlicher Höhe angeordnet sein, und mögen somit auch unterschiedliche Ruhe-Präferenzen von Mitgliedern einer Flugzeugbesatzung erfüllen können.

Gemäß einer weiteren exemplarischen Ausgestaltung der vorliegenden Erfindung mag zumindest eines der ersten und der zweiten Befestigungselemente als Drehgelenk ausgebildet sein und verschiebbar am Trägerelement angebracht sein. Eine entsprechende Ausgestaltung eines Befestigungselementes mag es auf einfache Weise ermöglichen, eine kombinierte Rotations- und Translationsbewegung bereitzustellen. So mag der Rotationsteil als Drehung um das Drehgelenk, welches beispielsweise einen Freiheitsgrad aufweisen mag, angesehen werden, während gleichzeitig das Befestigungselement am Trägerelement verschoben werden mag, was ebenfalls als ein Freiheitsgrad anzusehen ist.

Gemäß einer weiteren exemplarischen Ausgestaltung der vorliegenden Erfindung mag zumindest eines der ersten und zweiten Befestigungselemente ausgeführt sein als ein Element der Gruppe bestehend aus Strebe, Seil und Kulissenführung.

Eine entsprechende Ausgestaltung Seil oder Strebe beispielsweise mag eine wirksame Aufnahme bzw. (Ab)-Leitung von auftretenden Hebelkräften ermöglichen. Weiterhin mag es insbesondere durch eine Strebe ermöglicht werden, in Zusammenschau mit einem zuvor beschriebenen ersten oder zweiten Befestigungselement eine definierte gleichförmige Bewegung, die im Wesentlichen in ihrer Gesamtheit präzise bestimmbar ist, zu ermöglichen.

Beispielsweise ermöglicht es eine Kombination eines als verschiebbares Drehgelenk ausgebildetes Befestigungselementes zusammen mit einem als Strebe ausgebildeten Befestigungselement, eine präzise definierte und bestimmbare kombinierte Rotations- und Translationsbewegung auszuführen.

Gemäß einer weiteren exemplarischen Ausgestaltung der vorliegenden Erfindung mag jede Liegemöglichkeit einen zweiten Befestigungsbereich aufweisen, in dem die Liegemöglichkeit an einem weiteren Trägerelement anbringbar ist.

Das weitere Trägerelement mag hierbei als ein dem ersten Trägerelement identisch oder ähnlich ausgebildetes Trägerelement ausgestaltet sein, beispielsweise eine weitere Wand einer Flugzeuginnenausstattung. Somit mag es möglich sein, die Liegemöglichkeit in einem weiteren Bereich, beispielsweise dem Ende gegenüberliegend dem ersten Befestigungsbereich anzubringen, zu befestigen und/oder abzustützen. Alternativ mag das zweite Trägerelement, im zweiten Befestigungsbereich an der Liegemöglichkeit befestigt, ausklappbar in die Liegemöglichkeit integriert sein.

Durch eine entsprechende Ausgestaltung mit einer möglichen Abstützung bzw. Befestigung an beiden Befestigungsbereichen mögen auf die Befestigungsstruktur wirkende Hebelkräfte wirksam vermieden werden.

Gemäß einer weiteren bevorzugten Ausgestaltung der vorliegenden Erfindung mag zumindest ein Element aus der Gruppe bestehend aus erstem Befestigungselement, zweitem Befestigungselement, erstem Befestigungsbereich und zweitem Befestigungsbereich zum lösbaren Fixieren in zumindest einem von erstem Zustand und zweitem Zustand vorgesehen sein.

Lösbar fixieren mag in diesem Zusammenhang als automatisch oder manuell arretierendes Befestigen verstanden werden, welche Befestigung manuell oder automatisch wiederum gelöst werden mag.

Durch lösbares Fixieren mögen die Liegemöglichkeiten sicher in einem von erstem und/oder zweitem Zustand festgelegt werden. Somit mögen weiterführende Sicherheitsvorschriften, beispielsweise im Flugzeugbereich für eine Flugzeuginnenausstattung realisiert werden. Weiterhin mag sichergestellt sein, dass ein unbeabsichtigtes Verschieben bzw. Bewegen der Liegemöglichkeit aus einem jeweiligen Zustand zumindest teilweise in den jeweils anderen Zustand wirksam unterbunden wird.

Die Liegemöglichkeiten sind im zweiten Zustand im Wesentlichen vertikal und parallel angeordnet. Insbesondere mögen die Liegemöglichkeiten hierbei im Wesentlichen ohne Abstand angeordnet sein, somit eine erhöhte bzw. maximale Packungsdichte aufweisen.

Der zweite Zustand mag hierbei als Zustand der Nichtbenutzung der erfindungsgemäßen Liegemöglichkeit bzw. der erfindungsgemäßen Liege-Anordnung angesehen werden. Im zweiten Zustand mögen beispielsweise die Liegemöglichkeiten vollständig in einem Zwischenraum bzw. einer Aussparung oder Nische angeordnet sein und möglicherweise plan mit einer weiteren Oberfläche abschließen.

Somit mag eine optisch unauffällige Verstauung der Liege-Anordnung im nicht benötigten Zustand erreichbar sein.

Gemäß einer weiteren exemplarischen Ausgestaltung der vorliegenden Erfindung mag zumindest eine Liegemöglichkeit eine einstückige Liegefläche aufweisen.

Einstückig mag in diesem Zusammenhang als kompakt durchgehend, ohne wesentliche Unterbrechung, verstanden werden.

Eine einstückige Liegefläche mag somit einen hohen Liegekomfort bereitstellen, ohne dass Vertiefungen, Aufwölbungen, Knicke oder Kanten sich überschneidender bzw. abschnittweise ausgebildeter Teile eine unangenehme Körperhaltung bzw. unergonomische Krafteinwirkungen bedingen.

Gemäß einer weiteren exemplarischen Ausgestaltung der vorliegenden Erfindung mag die erfindungsgemäße Liege-Anordnung weiterhin zumindest ein Element aus der Gruppe bestehend aus Kraftunterstützungselement und Aktuator aufweisen, welches Element eingerichtet ist, ein Verschwenken einer Liegemöglichkeit zwischen erstem und zweitem Zustand zu unterstützen und/oder zu automatisieren.

Durch ein entsprechendes Element mag es ermöglicht werden, das Verschwenken einer Liegemöglichkeit, also das Überführen von einer Liegemöglichkeit zwischen einem ersten und einem zweiten Zustand mit wenig oder keinem Kraftaufwand zu ermöglichen.

So mag beispielsweise ein Federelement vorgesehen sein, welches, geeignet angebracht, einen Teil der Gewichtskraft einer Liegemöglichkeit kompensiert und somit eine Bewegung der Liegemöglichkeit mit reduziertem Kraftaufwand ermöglicht.

Weiterhin mag ein Aktuator, beispielsweise ein pneumatischer, elektrischer oder hydraulischer Aktuator vorgesehen sein, welcher manuell oder automatisiert gesteuert, eine Bewegung einer Liegemöglichkeit zwischen erstem und zweitem Zustand ohne Krafteinwirkung ausführt.

Gemäß einer weiteren exemplarischen Ausgestaltung der vorliegenden Erfindung weist die erfindungsgemäße Liege-Anordnung ein Schnellwechselbefestigungselement am ersten Trägerelement auf, wobei das erste Trägerelement unter Verwendung des Schnellwechselbefestigungselementes an einem Element der Luftfahrzeugstruktur lösbar anbringbar ist.

Durch eine derartige Ausgestaltung mit einem Schnellwechselbefestigungselement mag das kurzfristige Umrüsten eines Flugzeuges, mit einer erfindungsgemäßen Liege-Anordnung realisierbar sein. Wird ein Flugzeug für eine Flugverbindung eingesetzt, bei welcher aufgrund der Flugdauer keine zusätzliche Flugzeugbesatzung benötigt wird, oder für welche Strecke anderweitig vorhandene Ruhemöglichkeiten in ausreichender Zahl vorhanden sind, so mag sich die erfindungsgemäße Liege-Anordnung kurzfristig, möglicherweise innerhalb der Stand-by-Zeit zwischen zwei Flügen, also möglicherweise am selben Tag, umrüsten lassen, die erfindungsgemäße Liege-Anordnung sich somit entfernen bzw. nachrüsten lassen.

Das (temporäre) Entfernen einer Liege-Anordnung mag zusätzlichen Stauraum schaffen und weiterhin aufgrund des nun eingesparten Gewichtes den Kerosinverbrauch eines Flugzeuges weiter reduzieren.

Gemäß einer weiteren exemplarischen Ausgestaltung der vorliegenden Erfindung mag die Liege-Anordnung in einem Tür-Bereich, insbesondere im Wesentlichen direkt an eine Türe anschließend, angeordnet sein.

Eine derartige Anordnung mag bevorzugt einen nur kurzfristig beim Boarding und Deboarding, beim Catering und/oder zur Reinigung eines Verkehrsmittels, z. B. eines Flugzeugs, benötigten Platz im Bereich einer Flugzeugeingangstüre für eine erfindungsgemäße Liege-Anordnung verwenden. Aufgrund der in den Regularien vorgeschriebenen großzügigen Ausgestaltung einer Flugzeugeingangstüre und des direkt anschließenden Bereiches und mag dieser somit mangels anderweitiger Verwendung während des Fluges meist als leerer, nicht eingesetzter Bereich angesehen werden.

Somit mag eine erfindungsgemäße Liege-Anordnung im Wesentlichen sogar ohne zusätzlichen Platzverbrauch in der Flugzeugkabine realisiert werden.

Es sei angemerkt, dass, wenn im Rahmen der vorliegenden Erfindung von einem Übergang bzw. einem Verschwenken zwischen einem ersten und einem zweiten Zustand gesprochen wird. Ebenso ist hierunter der umgekehrte Vorgang, der Übergang, das Verschwenken zwischen zweiten und erstem Zustand zu verstehen.

Die erfindungsgemäße Liege-Anordnung mag jedoch nicht ausschließlich im Bereich einer Flugzeugeingangstüre realisiert werden, sondern beispielsweise auch in einem herkömmlichen Crew Rest Compartment zur Anwendung kommen, um eine alternative Nutzung desselben zu ermöglichen.

### KURZE ZUSAMMENFASSUNG DER ZEICHNUNGEN

Nachfolgend werden Ausführungsbeispiele der vorliegenden Erfindung in den Figuren dargestellt und im Weiteren näher erläutert.

Gleiche oder ähnliche Komponenten in unterschiedlichen Figuren sind mit gleichen oder ähnlichen Bezugsziffern versehen.

Die Darstellung in den Figuren ist schematisch und nicht maßstäblich, mag jedoch qualitative Größenverhältnisse wiedergeben.

Die Erfindung beschränkt sich in ihrer Ausführung nicht auf die in den Figuren dargestellten Ausführungsformen. Vielmehr ist eine Vielzahl von Varianten denkbar, welche von der dargestellten Lösung und dem erfindungsgemäßen Prinzip auch bei grundsätzlich anders gearteter Ausführungsform Gebrauch machen.

Es zeigen:
- Figur 1: eine exemplarische Ausgestaltung eines Bereichs einer Flugzeugeingangstüre gemäß der vorliegenden Erfindung im zweiten Zustand,
- Figuren 2a, b: exemplarische Ausgestaltungen der vorliegenden Erfindung im ersten Zustand,
- Figuren 3a, b: Detailansichten von exemplarischen Ausgestaltungen der vorliegenden Erfindung im Übergang zwischen erstem und zweitem Zustand, und
- Figuren 4a bis h: Detaildarstellung eines Übergangs einer exemplarischen Ausgestaltung der vorliegenden Erfindung zwischen erstem und zweitem Zustand.

### BESCHREIBUNG DER EXEMPLARISCHEN AUSGESTALTUNGEN

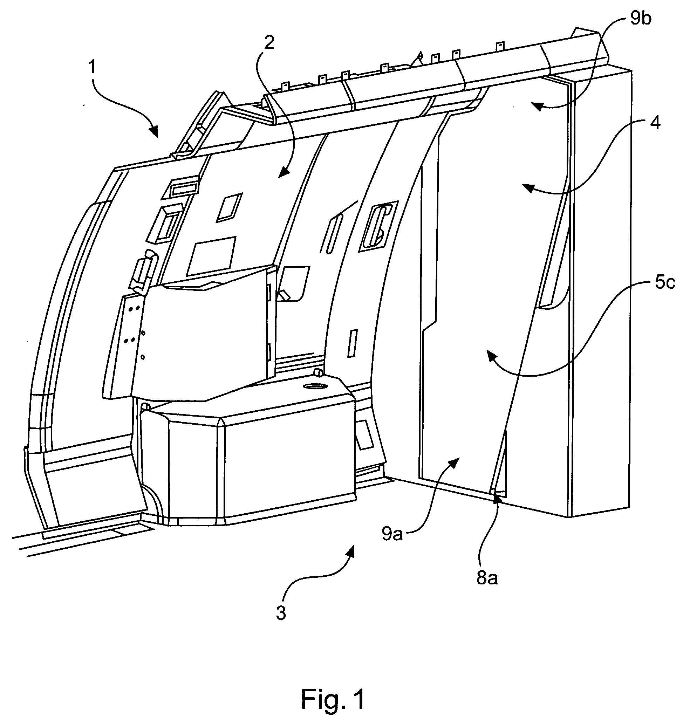

Im Weiteren wird Bezug nehmend auf Figur 1 eine exemplarische Ausgestaltung der vorliegenden Erfindung im zweiten Zustand beschrieben.

Figur 1 zeigt einen Ausschnitt aus einem Flugzeugrumpf 1, insbesondere eine Flugzeuginnenausstattung mit einer Flugzeugtüre 2 und einem davor angeordneten Bereich 3. Seitlich der Flugzeugtüre 2 ist eine erfindungsgemäße Liege-Anordnung 4 vorgesehen, welche im vorliegenden Fall im zweiten Zustand angeordnet ist.

Zu sehen ist die Unterseite der Liegemöglichkeit 5c. Die Unterseite schließt im Wesentlichen plan und eben mit einem Monument der Flugzeuginnenausstattung 7 ab, in welchem die erfindungsgemäße Liege-Anordnung 4 untergebracht ist. Durch eine Aussparung ist ein Befestigungselement 8a, angebracht am Boden des Monuments 7 und am ersten Befestigungsbereich 9a der Liegemöglichkeit 5c dargestellt. Das Befestigungselement 8a ist hierbei als verschiebbares Drehgelenk ausgebildet.

Die Form der Liegemöglichkeit 5c ist hierbei an die Form der Flugzeugtüre 2 bzw. deren Anbauten angepasst, um einen bevorzugten, direkten Anschluss zu ermöglichen, insbesondere ohne Öffnungen oder Spalten.

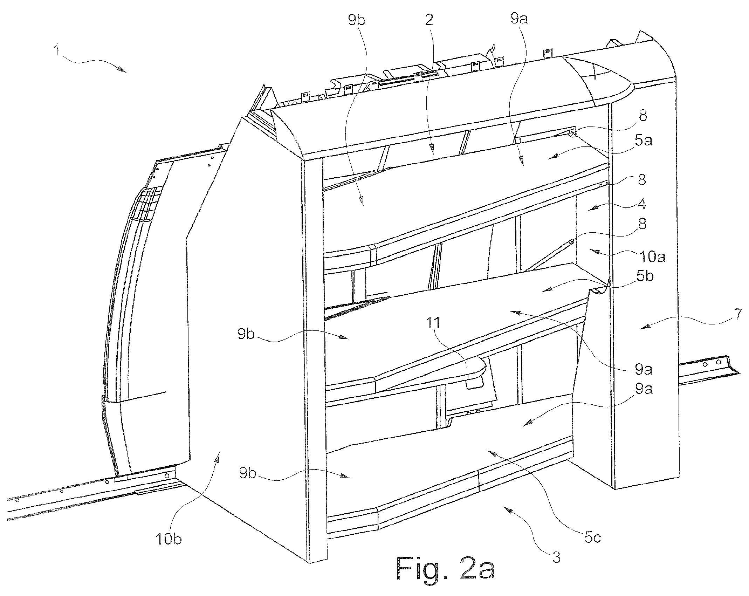

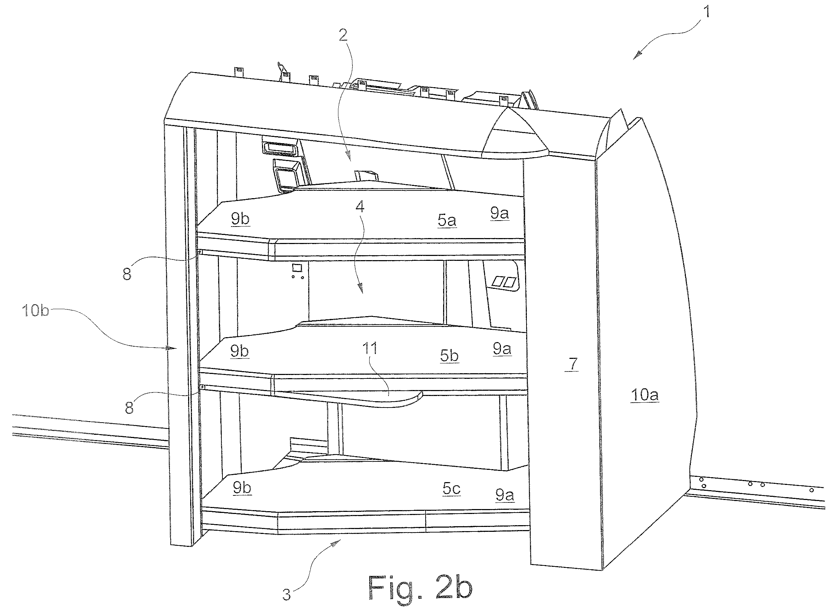

Weiter Bezug nehmend auf Figuren 2a und b werden exemplarische Ausgestaltungen der vorliegenden Erfindung im ersten Zustand beschrieben.

Figur 2a und 2b unterscheiden sich durch einen geringfügig geänderten Blickwinkel.

In Figur 2a zu sehen ist der Bereich der Flugzeugeingangstüre 3 mit dahinter liegender Flugzeugeingangstüre 2. Das Monument 7 seitlich der Flugzeugeingangstüre 2 stellt hierbei gleichzeitig das erste Trägerelement 10a dar. Die Liege-Anordnung 4 weist drei Liegemöglichkeiten 5a,b,c mit leicht geänderten geometrischen Formen auf, um besonders bevorzugt an die rückseitige Geometrie des Flugzeugrumpfes 1 mit Flugzeugtüre 2 angepasst zu sein. Befestigungselemente 8 halten bzw. arretieren den jeweiligen ersten Befestigungsbereich 9a der Liegemöglichkeiten 5a,b,c.

Exemplarisch sind die Befestigungselemente 8 in Figur 2a je Liegemöglichkeit 5a,b,c als verschiebbare Drehgelenke in Kombination mit Streben ausgeführt.

Die hier dargestellte, mittlere Liegemöglichkeit 5b weist einen Stufenabschnitt 11 auf, welche ein einfaches Besteigen der oberen Liegemöglichkeit 5a ermöglicht. Ein zweites Trägerelement 10b, hier dargestellt als eine Wand einer Flugzeuginnenausstattung, ermöglicht das hebelfreie Aufliegen der Liegemöglichkeiten 5a,b,c im zweiten Befestigungsbereich 9b.

Leicht perspektivisch verändert sind Befestigungselemente 8 in Figur 2b zu erkennen, welche mit dem zweiten Trägerelement 10b in Eingriff stehen und somit ein sicheres Aufliegen der Liegemöglichkeiten 5a,b,c auf erstem und zweitem Trägerelement 10a,b zwischen erstem und zweitem Befestigungsbereich 9a,b ermöglichen.

Genauso vorstellbar ist es, dass die Liegemöglichkeiten 5a,b,c am zweiten Trägerelement 10b lediglich auf einer Kante bzw. einem Vorsprung aufliegen bzw. über eine eigene Trägerkonstruktion, z.B. aus der Unterseite ausklappbare Stützelemente, beispielsweise Beine, verfügt, über welche ein Abstützen am Boden möglich ist.

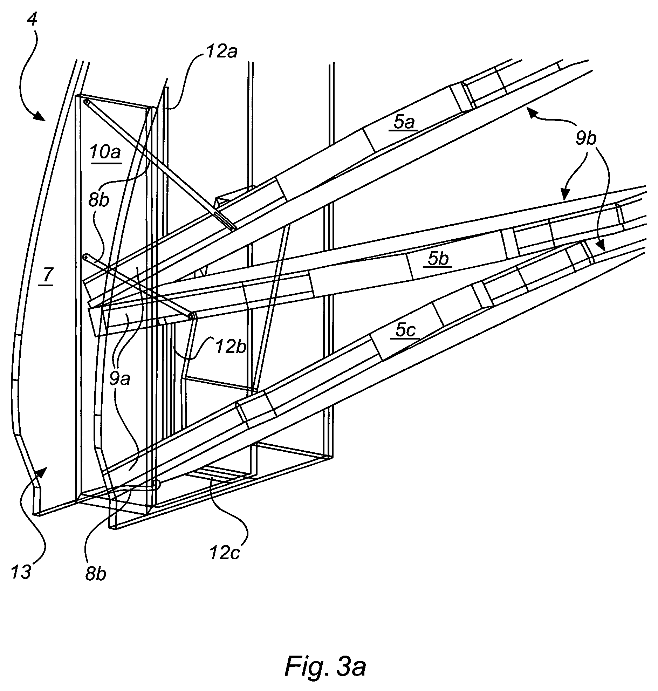

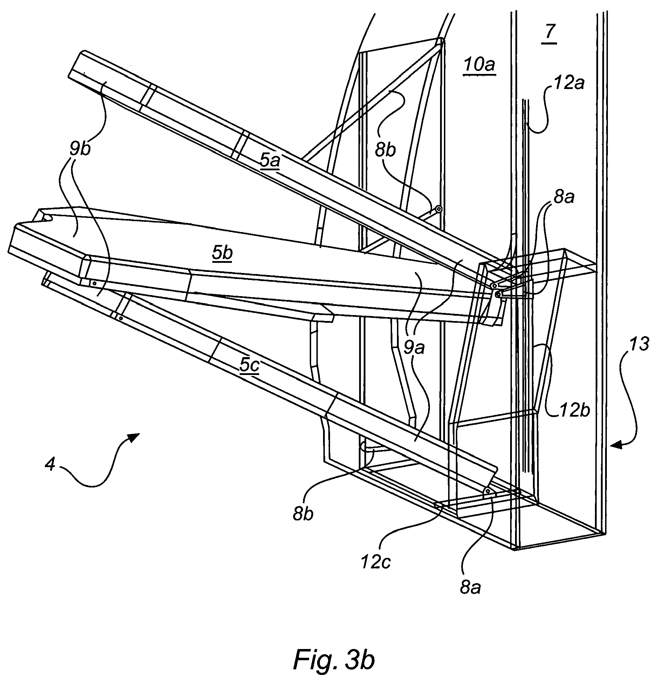

Weiter Bezug nehmend wird auf die Figuren 3a,b eine Detailansicht einer exemplarischen Ausgestaltung der vorliegenden Erfindung im Übergang zwischen erstem und zweitem Zustand beschrieben.

Figur 3a stellt hierbei eine Liege-Anordnung 4 mit drei Liegemöglichkeiten 5a,b,c dar, die Liegemöglichkeiten 5a,b,c sind in/an Monument 7 befestigt, welches gleichzeitig als erstes Trägerelement 10a fungiert. Die Liegemöglichkeit 5c ist im unteren Bereich, dem Bodenbereich, des Monuments 7 befestigt.

Ein Befestigungselement 8a ist hierbei als Drehgelenk ausgebildet, welches zusätzlich auf bzw. in einer Linearführung bzw. Kulissenführung 12c verschiebbar angeordnet ist. Somit mag die Liegemöglichkeit 5c beim Übergang vom zweiten in den ersten Zustand im Wesentlichen in Richtung der Rückwand 13 des Monuments 7 verschoben werden. Eine entsprechende Verschiebbarkeit auf Linearführung 12c ermöglicht es, annähernd gleiche Abmaße für alle drei Liegemöglichkeiten 5a,b,c vorzusehen, gleichzeitig jedoch eine übereinander liegende, gestaffelte Verstaumöglichkeit im zweiten Zustand bereitzustellen.

Die Befestigungselemente 8a,b der Liegemöglichkeiten 5a,b sind hier exemplarisch als jeweils ein verschiebbares Drehgelenk in Kombination mit einer Strebe ausgeführt. Das verschiebbare Drehgelenk der Liegemöglichkeit 5a wird in einer Linearführung 12a geführt, welche sich im Wesentlichen von der Liegehöhe der Liegemöglichkeit 5a Richtung Boden des Monuments 7 bzw. des ersten Trägerelements 10a erstreckt.

Das verschiebbare Drehgelenk der Liegemöglichkeit 5b ist in einer Linearführung 12b angeordnet, welche sich im Wesentlichen von der Liegehöhe der Liegemöglichkeit 5b Richtung Boden des Monuments 7 erstreckt. Gleichfalls mag es denkbar sein, dass die Linearführungen 12a,b als eine Einheit ausgeführt sind, wobei die verschiebbaren Drehgelenke der Liegemöglichkeiten 5a,b in derselben Linearführung angreifen.

Auf der dem verschiebbaren Drehgelenk gegenüberliegenden Seite des ersten Befestigungsbereiches 9a der Liegemöglichkeiten 5a,b ist in Figuren 3a,b exemplarisch eine Strebe als Befestigungselement dargestellt.

Durch die hieraus resultierende starre Anbindung der Befestigungspunkte der Strebe am Monument und an der Liegemöglichkeit 5a,b ergibt sich, dass die jeweiligen Anbindungspunkte der Strebe an den Liegemöglichkeiten 5a,b im Wesentlichen eine kreisförmige Bewegung um den Anbindungspunkt der Strebe am Monument durchführen.

Zusammen mit dem verschiebbaren Drehgelenk ergibt sich somit eine definierte Rotations- und Translationsbewegung der Liegeelemente 5a,b. Eine entsprechende Ausgestaltung ist ebenso für die Liegemöglichkeit 5c denkbar, hier jedoch exemplarisch dargestellt, mit im Wesentlichen senkrecht zu Linearführungen 12a,b angeordneter Linearführung 12c sowie einer Kulissenführung als zweites Befestigungselement 8b.

Gleichfalls ist denkbar, dass eines oder beide der Befestigungselemente 8a,b nicht nur auf einer Seite sondern auch auf der anderen Seite der Liegemöglichkeiten 5a,b,c ausgeführt sind. Somit ist denkbar, dass beide Befestigungselemente 8a,b angeordnet am ersten Befestigungsbereich 9a als Streben bzw. Seile oder Kulissenführungen oder aber auch als verschiebbare Drehgelenke ausgeführt sind.

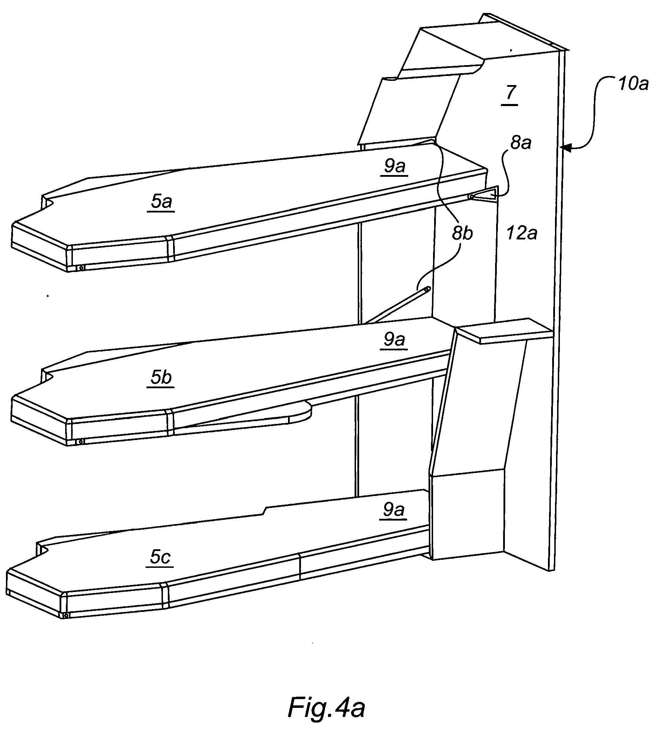

Weiter Bezug nehmend auf Figuren 4a bis h wird eine detaillierte Darstellung eines Übergangs einer exemplarischen Ausgestaltung der vorliegenden Erfindung zwischen erstem und zweitem Zustand beschrieben.

In den Figuren 4a bis h dargestellt sind Liegemöglichkeiten 5a,b,c. Die Liegemöglichkeiten 5a,b,c sind auf einer Seite des ersten Befestigungsbereichs 9a über Befestigungselemente 8 mit dem ersten Trägerelement 10a verbunden. Jeweils ein Befestigungselement 8b jeder Liegemöglichkeit 5a,b ist als Strebe bzw. als Seil im Falle der Liegemöglichkeit 5c ausgeführt, das jeweils andere Befestigungselement 8a als verschiebbares Drehgelenk, im Falle der ersten Liegemöglichkeit 5a an Linearführung 12a angebracht. Das verschiebbar gelagerte Drehgelenk der Liegemöglichkeit 5c ist an Linearführung 12c angebracht.

Figur 4a zeigt den ersten Zustand, ohne die Befestigung des zweiten Befestigungsbereiches 9b am zweiten Trägerelement 10b darzustellen. Alle Liegemöglichkeiten 5a,b,c sind horizontal angeordnet, somit parallel zueinander.

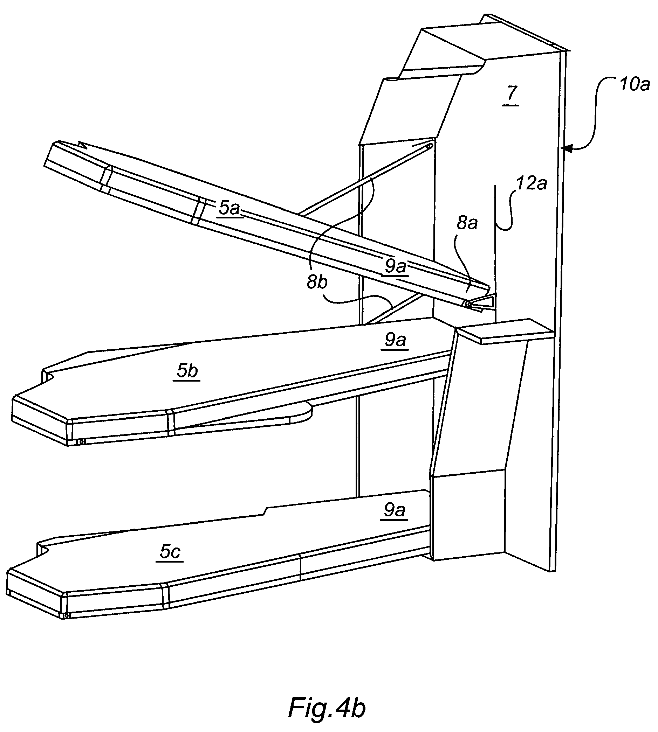

In einem ersten Schritt, wie in Fig. 4b dargestellt, wird die Liegemöglichkeit 5a nach oben geklappt. Hierbei bewegt sich das verschiebbar gelagerte Drehgelenk 8a nach unten, die Liegemöglichkeit 5a führt hierbei eine Drehung um den Anbringungspunkt der Strebe 8b aus und somit gleichzeitig eine Bewegung entlang der Linearführung 12a.

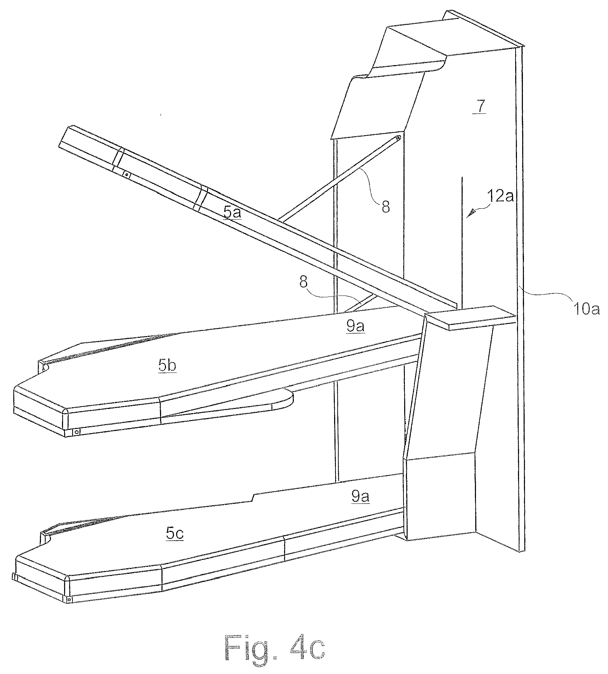

Ein vorheriges Entriegeln eines verriegelten Befestigungselementes 8a mag durchgeführt worden sein. Die Bewegung der ersten Liegemöglichkeit 5a im Bereich des ersten Befestigungsbereichs 9a nach unten wird, wie in Figur 4c dargestellt, fortgesetzt, bis das Ende des ersten Befestigungsbereichs 9a am ersten Befestigungsbereich 9a der Liegemöglichkeit 5b angekommen ist.

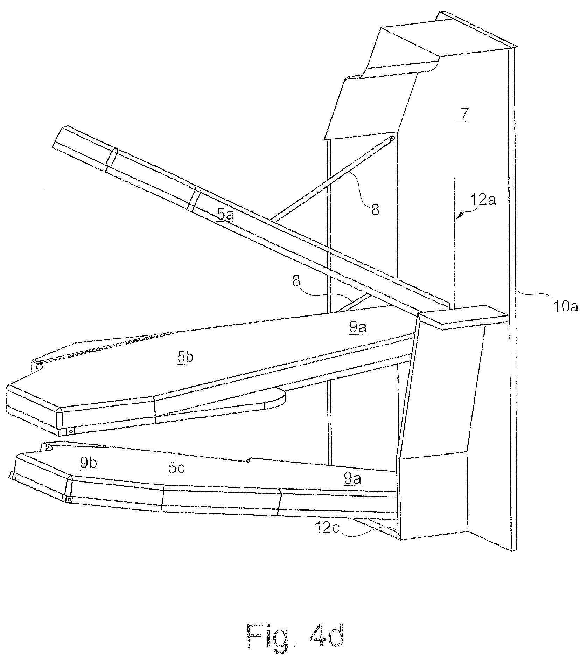

In Figur 4d dargestellt wird nachfolgend die Liegemöglichkeit 5c mit ihrem zweiten Befestigungsbereich 9b nach oben, Richtung der Unterseite der Liegemöglichkeit 5b, geführt. Als Drehpunkt fungiert hierbei das in Figur 4d nicht zu sehende Befestigungselement 8a, ausgeführt als verschiebbares Drehgelenk, angeordnet auf Linearführung 12c.

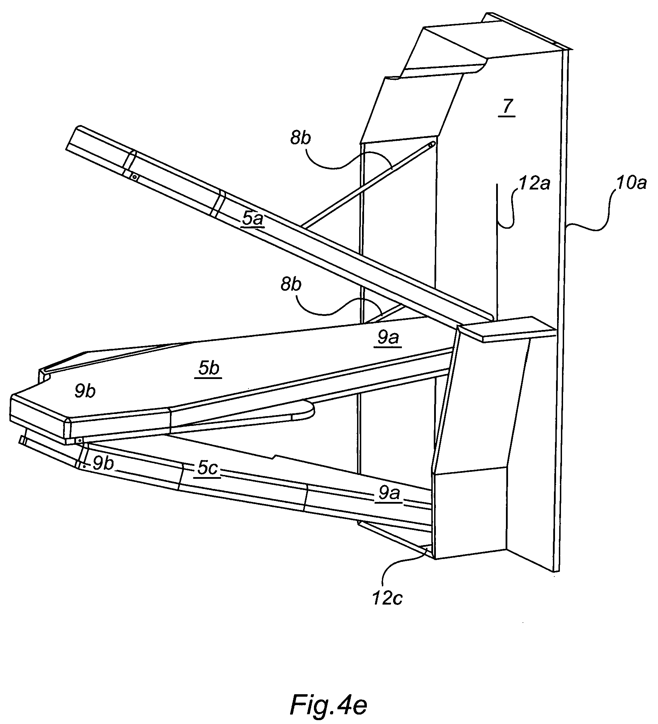

Wie in Figur 4e dargestellt, wird die Drehbewegung der Liegemöglichkeit 5c nach oben vorgenommen, bis der zweite Befestigungsbereich 9b der Liegemöglichkeit 5c am zweiten Befestigungsbereich 9b der Liegemöglichkeit 5a ansteht. Auch die Befestigungselemente 8 der Liegemöglichkeit 5c mögen vor einer entsprechenden Bewegung gelöst bzw. entriegelt worden sein.

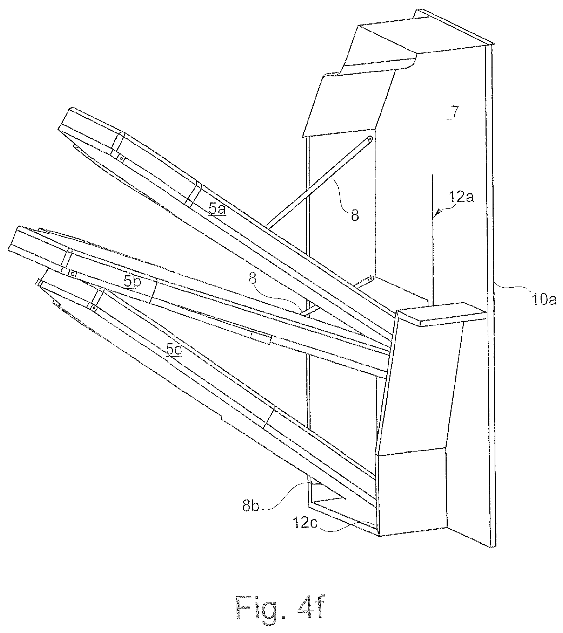

Nachfolgend wird in Figur 4f auch die Liegemöglichkeit 5b geneigt, hierbei geführt durch ihre Befestigungselemente 8a,b, ausgeführt als Strebe sowie verschiebbares Drehgelenk. Die Linearführung 12b des verschiebbaren Drehgelenks der Liegemöglichkeit 5b ist in Figur 4f wiederum verdeckt. Im Weiteren ist das zweite Befestigungselement 8b der Liegemöglichkeit 5c dargestellt, welches als Kulissenführung ausgebildet sein mag.

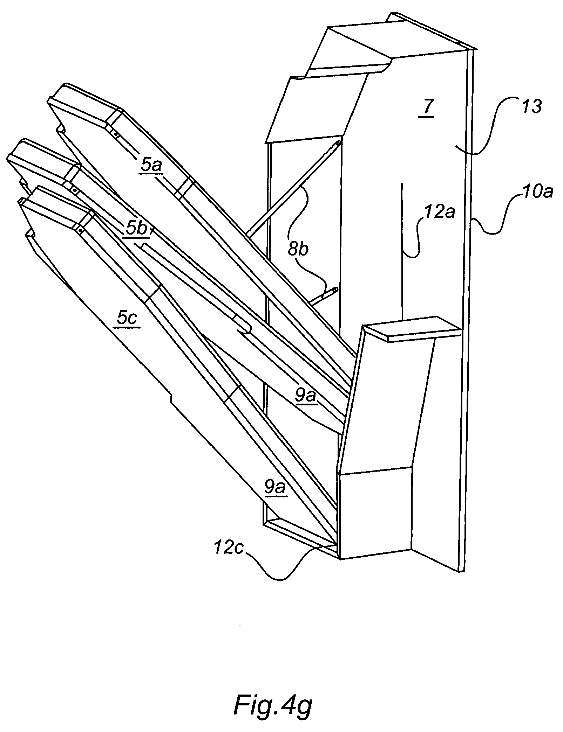

Die Abwärtsbewegung der ersten Befestigungsbereiche 9a der Liegemöglichkeiten 5a,b Richtung Kabinenboden wird, wie in Figur 4g dargestellt, fortgesetzt. Hierbei neigen sich die Liegemöglichkeiten 5a,b weiter Richtung Rückwand 13 des Monuments 7 und stellen sich somit senkrecht.

Die Liegemöglichkeit 5c folgt dieser Bewegung, gleitet jedoch ihrerseits über ihr verschiebbar gelagertes Drehgelenk auf Linearführung 12c von der Rückwand 13 hinweg und ermöglicht somit den Liegemöglichkeiten 5a,b ein Hintergleiten und somit sich Positionieren, zwischen Rückwand 13 und dem ersten Befestigungsbereich 9a der Liegemöglichkeit 5c.

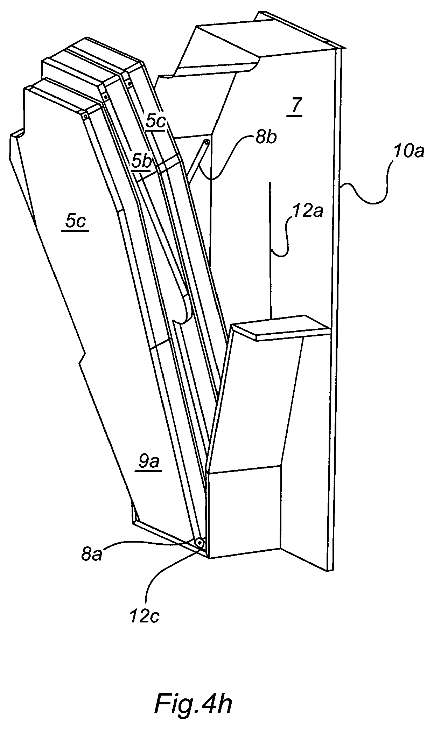

Der zweite Zustand wird in Figur 4h fast erreicht. Die Liegemöglichkeiten 5a,b,c liegen im Wesentlichen dicht gepackt übereinander, wenngleich sie auch noch nicht senkrecht stehen. Das Befestigungselement 8a der Liegemöglichkeit 5c mag im Wesentlichen in seiner vordersten Position in der Linearführung 12c sein und Platz für die Liegemöglichkeiten 5a,b zwischen der Liegemöglichkeit 5c und der Rückwand 13 bieten. Wird das Neigen bzw. senkrecht stellen der Liegemöglichkeiten 5a,b,c weiter fortgesetzt, so ergibt sich letztendlich eine Anordnung wie in Figur 1 dargestellt.

Zum Hochklappen der exemplarischen Ausgestaltung gemäß Figuren 4a bis h mögen die Liegemöglichkeiten zuerst am zweiten Trägerelement entriegelt werden. Anschließend mag die Verriegelung des verschiebbaren Drehgelenks an der Liegemöglichkeit 5a vorgenommen werden. Liegt der erste Befestigungsbereich 9a der Liegemöglichkeit 5a auf dem ersten Befestigungsbereich 9a der Liegemöglichkeit 5b auf, mag die Entriegelung von Liegemöglichkeiten 5b und 5c erfolgen.

Im Anschluss mag die Liegemöglichkeit 5c in ihrem zweiten Befestigungsbereich 9b angehoben und im Weiteren gegen die Liegemöglichkeiten 5a,b gedrückt werden, bis alle Liegemöglichkeiten 5a,b,c in vertikaler Lage sind. In vertikaler Lage mögen die Liegemöglichkeiten 5a,b,c im Gehäuse bzw. Monument 7 arretiert werden.

Eine Kraftunterstützung, zum Beispiel durch, nicht näher dargestellte, Federelemente, mag die benötigten Kräfte zum Verschieben bzw. Umsetzen reduzieren und Konstellationen bestimmen, bei denen die Liege-Anordnung 4 ohne Krafteinfluss im Wesentlichen stabil ist.

Ebenfalls denkbar ist eine Kraftunterstützung durch Aktuatoren bzw. ein automatischer oder halbautomatischer Antrieb zum Verfahren der Liege-Anordnung 4 unter Verwendung von Aktuatoren.

Durch die exemplarisch dargestellte diagonale Anordnung der Liegemöglichkeiten 5a,b,c mag die benötigte Länge der Liegemöglichkeiten zum Erreichen einer gewünschten Länge einer Liegefläche der Liegemöglichkeiten zusätzlich reduziert werden.

Weiterhin ist es denkbar, das Monument 7, in seiner Einheit wie z.B. in Fig. 4h dargestellt, mit einem Schnellwechselbefestigungselement zu versehen, welches es ermöglicht, das Monument 7 vollständig, insbesondere komplett im geschlossenen, zweiten Zustand vom Rest der Flugzeuginnenausstattung bzw. der Flugzeugstruktur zu lösen, um es bei Nichtbedarf aus dem Flugzeug zu entfernen.

Ergänzend sei darauf hingewiesen, dass "aufweisend" oder "umfassend" keine anderen Elemente oder Schritte ausschließt und dass "eine" oder "ein" keine Mehrzahl ausschließt. Ferner sei darauf hingewiesen, dass Merkmale oder Schritte, die mit Verweis auf eines der obigen Ausführungsbeispiele bzw. exemplarischen Ausgestaltungen der vorliegenden Erfindung beschrieben worden sind, auch in Kombination mit anderen Merkmalen oder Schritten anderer oben beschriebener Ausführungsbeispiele oder exemplarischer Ausgestaltungen der vorliegenden Erfindung verwendet werden können. Bezugszeichen in den Ansprüchen sind nicht als einschränkend anzusehen.

### Bezugszeichenliste

- 1: Flugzeugrumpf
- 2: Flugzeugtüre
- 3: Bereich der Flugzeugtüre
- 4: Liege-Anordnung
- 5a,b,c: Liegemöglichkeit

- 7: Monument
- 8a,b: erstes, zweites Befestigungselement
- 9a,b: erster, zweiter Befestigungsbereich
- 10a,b: erstes, zweites Trägerelement
- 11: Trittstufe
- 12a,b,c: Linearführung
- 13: Rückwand des Monuments

## Patentansprüche

1. Luftfahrzeug mit einer Liege-Anordnung (4), aufweisend
ein erstes Trägerelement (10a); und
eine erste Liegemöglichkeit (5a), eine zweite Liegemöglichkeit (5b) und eine dritte Liegemöglichkeit (5c);
die erste, zweite und dritte Liegemöglichkeit (5a, b, c) jeweils aufweisend einen ersten Befestigungsbereich (9a);
wobei der erste Befestigungsbereich (9a) der ersten, zweiten und dritten Liegemöglichkeit (5a, b, c) jeweils ein erstes als Drehgelenk ausgebildetes Befestigungselement (8a) sowie ein zweites Befestigungselement (8b) aufweist;
wobei die erste, zweite und dritte Liegemöglichkeit (5a, b, c) jeweils unter Verwendung des ersten und des zweiten Befestigungselementes (8a, b) am ersten Trägerelement (10a) angebracht ist;
wobei das erste Befestigungselement (8a) der ersten, zweiten und dritten Liegemöglichkeit (5a, b, c) jeweils auf bzw. in einer Linearführung (12a, b, c) verschiebbar angeordnet ist;
wobei die Linearführung (12c) der dritten Liegemöglichkeit (5a) senkrecht zu den Linearführungen der ersten und zweiten Liegemöglichkeiten (5a, b) angeordnet ist;
wobei die erste, zweite und dritte Liegemöglichkeit (5a, b, c) jeweils dazu eingerichtet ist, zwischen einem ersten Zustand und einem zweiten Zustand verschwenkt zu werden, wobei der Übergang zwischen erstem und zweiten Zustand als eine kombinierte Rotations- und Translationsbewegung erfolgt;
wobei die erste, zweite und dritte Liegemöglichkeit (5a, b, c) im ersten Zustand übereinander und im Wesentlichen horizontal und im zweiten Zustand im Wesentlichen vertikal und parallel angeordnet sind; und
wobei die erste, zweite und dritte Liegemöglichkeit (5a, b, c) jeweils einen zweiten Befestigungsbereich (9b) aufweist, mit dem die Liegemöglichkeit (5a, b, c) an einem zweiten Trägerelement (10b) anbringbar ist.

2. Luftfahrzeug gemäß Anspruch 1, wobei zumindest eines der zweiten Befestigungselemente (8b) als Drehgelenk ausgebildet ist und verschiebbar am ersten Trägerelement (10a) angebracht ist.

3. Luftfahrzeug gemäß einem der Ansprüche 1 und 2, wobei zumindest eines der zweiten Befestigungselemente (8b) ausgeführt ist als ein Element aus der Gruppe bestehend aus Strebe, Seil und Kulissenführung.

4. Luftfahrzeug gemäß einem der Ansprüche 1 bis 3, wobei zumindest ein Element aus der Gruppe bestehend aus erstem Befestigungselement (8a), zweitem Befestigungselement (8b), erstem Befestigungsbereich (9a) und zweitem Befestigungsbereich (9b) zum lösbaren Fixieren in zumindest einem von erstem Zustand und zweitem Zustand eingerichtet ist.

5. Luftfahrzeug gemäß einem der Ansprüche 1 bis 4, wobei zumindest eine Liegemöglichkeit (5a, b, c) eine einstückige Liegefläche aufweist.

6. Luftfahrzeug gemäß einem der Ansprüche 1 bis 5, weiterhin aufweisend ein Element aus der Gruppe bestehend aus Kraftunterstützungselement und Aktuator, welches Element eingerichtet ist, ein Verschwenken einer Liegemöglichkeit (5a, b, c) zwischen erstem und zweiten Zustand zu unterstützen und/oder zu automatisieren.

7. Luftfahrzeug gemäß einem der vorangehenden Ansprüche,
wobei das erste Trägerelement (10a) ein Schnellwechselbefestigungselement aufweist,
wobei das erste Trägerelement (10a) unter Verwendung des Schnellwechselbefestigungselementes an einem Element der Luftfahrzeugstruktur lösbar angebracht ist.

8. Luftfahrzeug gemäß einem der vorangehenden Ansprüche, wobei die Liege-Anordnung (4) in einem Tür-Bereich (3), insbesondere im Wesentlichen direkt an eine Türe (2) anschließend, angeordnet ist.

## Claims

1. An aircraft with a rest arrangement (4), comprising:
a first support element (10a); and
a first lying-down facility (5a), a second lying-down facility (5b), and a third lying-down facility (5c);
the first, second and third lying-down facilities (5a, b, c) comprising a first fastening region (9a), respectively;
wherein the first fastening region (9a) of the first, second and third lying-down facilities (5a, b, c) comprise a first fastening element (8a), which is adapted as a pivot joint, and a second fastening element (8b), respectively; and
wherein the first, second and third lying-down facility (5a, b, c) are affixed to the first support element (10a) by the first and second fastening elements (8a, b), respectively;
wherein the first fastening elements of the first, second and third lying-down facilities (5a, b, c) are slidably arranged on or in a linear guide (12a, b, c), respectively;
wherein the linear guide (12c) of the third lying-down facility (5a) is vertically arranged to the linear guides of the first and second lying-down facilities (5a, b);
wherein the first, second, and third lying-down facilities (5a, b, c) are pivotable between a first state and a second state, respectively, wherein the transition between the first and second state is a combined rotational and translational movement;
wherein the first, second, and third lying-down facilities (5a, b, c) are arranged to be above each other and essentially horizontal in the first state and are arranged to be essentially vertical and parallel to each other in the second state; and
wherein the first, second and third lying-down facilities (5a, b, c) comprise a second fastening region (9b), respectively, by which the lying-down facility (5a, b, c) is affixable to a second supporting element (10b).

2. The aircraft of claim 1, wherein at least one of the second fastening elements (8b) is adapted as a pivot joint and is slidably affixed to the first support element (10a).

3. The aircraft of any one of claims 1 and 2, wherein at least one of the second fastening elements (8b) is adapted as an element from the group comprising a strut, cable and link slide.

4. The aircraft of any one of claims 1 to 3, wherein at least one element from the group consisting of a first fastening element (8a), a second fastening element (8b), a first fastening region (9a) and a second fastening region (9b) is adapted for detachable affixing in at least one of the first state and the second state.

5. The aircraft of any one of claims 1 to 4, wherein at least one lying-down facility (5a, b, c) comprises a single-piece area for lying down.

6. The aircraft of any one of claims 1 to 5, further comprising an element from the group consisting of a force support element and an actuator, which element is adapted to support and/or automate pivoting of a lying-down facility (5a, b, c) between the first state and the second state.

7. The aircraft of one of the preceding claims,
wherein the first support element (10a) comprises a quick-change fastening element,
wherein with the use of the quick-change fastening element the first support element (10a) is detachably affixed to an element of the structure of the means of transport.

8. The aircraft of one of the preceding claims, wherein the rest arrangement (4) is arranged in a door region (3), in particular essentially directly adjacent to a door (2).

## Revendications

1. Aéronef comportant un ensemble couchette (4), présentant :
un premier élément de support (10a) ; et
un premier moyen de couchage (5a), un second moyen de couchage (5b) et un troisième moyen de couchage (5c) ;
les premier, second et troisième moyens de couchage (5a, b, c) présentant respectivement une première zone de fixation (9a) ;
dans lequel la première zone de fixation (9a) des premier, second et troisième moyens de couchage (5a, b, c) présentent respectivement un premier élément de fixation (8a) réalisé en tant qu'articulation de rotation ainsi qu'un second élément de fixation (8b) ;
dans lequel les premier, second et troisième moyens de couchage (5a, b, c) sont montés sur le premier élément support (10a) respectivement à l'aide du premier et du second élément de fixation (8a, b) ;
dans lequel le premier élément de fixation (8a) des premier, second et troisième moyens de couchage (5a, b, c) sont disposés coulissant respectivement sur ou dans un guidage linéaire (12a, b, c) ;
dans lequel le guidage linéaire (12c) du troisième moyen de couchage (5a) est disposé verticalement aux guidages linéaires des premier et second moyens de couchage (5a, b) ;
dans lequel les premier, second et troisième moyens de couchage (5a, b, c) sont respectivement agencés pour être pivotés entre un premier état et un second état, le passage entre le premier et le second état se faisant au moyen d'un mouvement combiné de rotation et de translation ;
dans lequel les premier, second et troisième moyens de couchage (5a, b, c) sont disposés les uns au-dessus des autres dans le premier état et essentiellement horizontalement et dans le second état essentiellement verticalement et parallèlement ; et
dans lequel les premier, second et troisième moyens de couchage (5a, b, c) présentent respectivement une seconde zone de fixation (9b), avec laquelle le moyen de couchage (5a, b, c) peut être monté au niveau d'un second élément de support (10b).

2. Aéronef selon la revendication 1, dans lequel au moins un des seconds éléments de fixation (8b) est réalisé en tant qu'articulation de rotation et monté coulissant au niveau du premier élément de support (10a).

3. Aéronef selon l'une des revendications 1 et 2, dans lequel au moins un des seconds éléments de fixation (8b) est réalisé en tant qu'élément du groupe constitué d'entretoise, câble et guide-coulisse.

4. Aéronef selon l'une des revendications 1 à 3, dans lequel au moins un élément du groupe constitué de premier élément de fixation (8a), second élément de fixation (8b), première zone de fixation (9a) et seconde zone de fixation (9b) est agencé pour la fixation amovible dans au moins un d'un premier état et second état.

5. Aéronef selon l'une des revendications 1 à 4, dans lequel au moins un moyen de couchage (5a, b, c) présente une surface de couchage en un seul tenant.

6. Aéronef selon l'une des revendications 1 à 5, présentant en outre un élément du groupe constitué d'élément d'assistance de force et d'actionneur, lequel élément étant agencé pour assister et/ou pour automatiser un pivotement d'un moyen de couchage (5a, b, c) entre le premier et le second état.

7. Aéronef selon l'une des revendications précédentes,
dans lequel le premier élément de support (10a) présente un élément de fixation à accroche rapide,
dans lequel le premier élément de support (10a) est monté amovible en utilisant l'élément de fixation à accroche rapide au niveau d'un élément de la structure d'aéronef.

8. Aéronef selon l'une des revendications précédentes, dans lequel le moyen de couchage (4) est disposé dans une zone de porte (3), en particulier essentiellement directement à la suite d'une porte (2).
